(19) Europäisches Patentamt
European Patent Office
Office européen des brevets

(11) **EP 2 225 447 B1**

(12) **EUROPÄISCHE PATENTSCHRIFT**

(45) Veröffentlichungstag und Bekanntmachung des Hinweises auf die Patenterteilung:
**18.05.2011  Patentblatt 2011/20**

(21) Anmeldenummer: **08851986.3**

(22) Anmeldetag: **17.11.2008**

(51) Int Cl.:
*F02D 31/00* *(2006.01)*    *F02D 41/00* *(2006.01)*

(86) Internationale Anmeldenummer:
**PCT/EP2008/009705**

(87) Internationale Veröffentlichungsnummer:
**WO 2009/065541 (28.05.2009 Gazette 2009/22)**

(54) **VERFAHREN ZUR REGELUNG EINES STATIONÄREN GASMOTORS**

METHOD FOR REGULATING A STATIONARY GAS MOTOR

PROCÉDÉ DE RÉGULATION D'UN MOTEUR À GAZ STATIONNAIRE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **23.11.2007  DE 102007056623**

(43) Veröffentlichungstag der Anmeldung:
**08.09.2010  Patentblatt 2010/36**

(73) Patentinhaber: **MTU FRIEDRICHSHAFEN GMBH 88045 Friedrichshafen (DE)**

(72) Erfinder:
• **BALDAUF, Johannes**
**88239 Wangen (DE)**
• **SMUDA, Peer**
**71065 Sindelfingen (DE)**
• **KLÄSER-JENEWEIN, Ludwig**
**88699 Frickingen (DE)**

(56) Entgegenhaltungen:
**EP-A- 0 974 745      EP-A- 1 158 149
DE-A1- 10 251 252     DE-A1- 10 346 983**

EP 2 225 447 B1

**Beschreibung**

Die Erfindung betrifft eine Verfahren zur Regelung eines stationären Gasmotors, bei dem eine Drehzahl-Regelabweichung aus einer Soll-Drehzahl sowie einer Ist-Drehzahl berechnet wird und aus der Drehzahl-Regelabweichung über einen Drehzahlregler als Stellgröße ein Soll-Moment bestimmt wird, welches über eine Momentbegrenzung auf ein Luftverhältnis-Begrenzungsmoment begrenzt wird. Ferner besteht das Verfahren darin, aus dem begrenzten Soll-Moment ein Soll-Volumenstrom zur Festlegung eines Gemisch-Drosselklappenwinkels sowie eines Gas-Drosselklappenwinkels zu bestimmen.

Stationäre Gasmotoren werden zur Stromerzeugung verwendet. Dabei wird der Gasmotor bei einem Lambdawert von zum Beispiel 1.7, also im Magerbetrieb mit Luftüberschuss, betrieben. Typischerweise umfasst der Gasmotor eine Gasdrosselklappe zum Festlegen des Gasanteils im Gas-Luftgemisch, einen Mischer zum Zusammenführen des brennbaren Gases mit der Luft, einen Verdichter als Teil eines Abgasturboladers, einen Kühler und eine Gemischdrosselklappe. Über die Gemischdrosselklappe wird der angesaugte Volumenstrom im Receiverrohr vor den Einlassventilen des Gasmotors und damit auch der Gemischdruck im Receiverrohr festgelegt.

Aus der EP 1 158 149 A1 ist ein stationärer Gasmotor zum Antreiben eines Generators bekannt. Gesteuert wird der Gasmotor, indem aus der Motorleistung über eine Kennlinie ein Soll-Lambda als Führungsgröße berechnet wird. An Hand des Soll-Lambdas berechnet ein elektronisches Motorsteuergerät einen Gasmengen-Sollwert zur Einstellung der Gasdrosselklappe. In einer zweiten Ausführungsform wird der Soll-Lambdawert aus einer Gemischdruck-Regelabweichung berechnet. Die Gemischdruck-Regelabweichung bestimmt sich aus dem detektierten Ist-Gemischdruck im Receiverrohr und dem Soll-Gemischdruck, welcher wiederum aus der Motorleistung über eine Kennlinie festgelegt wird. In einer dritten Ausführungsform wird ergänzend zur zweiten Ausführungsform der Gasmengen-Sollwert zur Einstellung der Gasdrosselklappe in Abhängigkeit der Stellung eines Verdichter-Bypassventils und der Drehzahl-Regelabweichung korrigiert. Gemeinsames Merkmal aller drei Ausführungsformen ist die Einstellung der Gasdrosselklappe auf einen Soll-Lambdawert. Im praktischen Betrieb wird bei einer Änderung der Leistungsvorgabe zuerst die Stellung der Gemischdrosselklappe als Leistungssteuerorgan verändert. Dies bewirkt, dass der angesaugte Gemischvolumenstrom sich ebenfalls ändert. Da zunächst die Stellung der Gasdrosselklappe konstant bleibt, ändert sich auch der Gas-Volumenstrom nicht. Hieraus resultiert ein sich veränderndes Ist-Lambda. Bei einer beispielsweise in Schließrichtung betätigten Gemischdrosselklappe wird eine Anfettung des Gemisches verursacht, wodurch eine Leistungsänderung des Gasmotors bewirkt wird. Als Reaktion auf diese Leistungsänderung werden dann der Soll-Lambdawert, der Gasmengen-Sollwert und die Stellung der Gasdrosselklappe verändert. Bei dieser Art der Regelung ist die Reaktionszeit, zum Beispiel bei Laständerung, kritisch, da systembedingt ein Eingriff in die Lambdaregelung träge ist.

Auch die DE 103 46 983 A1 beschreibt einen Gasmotor und ein Verfahren zur Regelung des Kraftstoffgemisches. Bei diesem Verfahren wird in einem ersten Schritt eine Ist-Druckdifferenz des Luftmassenstroms an einem Venturimischer erfasst und in einem zweiten Schritt aus der gemessenen Ist-Leistung des Gasmotors eine Soll-Druckdifferenz des Luftmassenstroms bestimmt. In einem dritten Schritt wird dann die Ist-Druckdifferenz der Soll-Druckdifferenz angenähert, indem über die Stellung der Gasdrosselklappe die zugeführte Gasmenge verändert wird. In einem vierten Schritt wird die sich einstellende Ist-Leistung des Gasmotors erneut detektiert und die Gemischdrosselklappe so eingestellt, dass die Soll-Ist-Abweichung der Druckdifferenz des Luftmassenstroms im Venturimischer sich verringert. Dieser sequentielle Ablauf wird iterativ so lange durchgeführt bis die Soll-Ist-Abweichung der Druckdifferenz kleiner als ein Grenzwert wird. Da eine Änderung der Stellung der Gemisch-Drosselklappe eine Leistungsänderung des Gasmotors bewirkt, muss die Stellung der Gas-Drosselklappe zur Kompensation der Leistungsänderung des Gasmotors nachgeregelt werden. Dies kann unter Umständen zum Überschwingen der Stellgrößen führen.

Ein weiteres Verfahren zur Steuerung eines Gasmotors ist aus der EP 0 974 745 A2 bekannt. Ein elektronisches Motorsteuergerät berechnet an Hand der Drehzahl-Regelabweichung die Stellung der Gemischdrosselklappe. Aus dem Druck und der Temperatur im Receiverrohr sowie der Ist-Drehzahl wird dann ein Luftfluss im Receiverrohr berechnet, aus welchem wiederum über den Lambdawert der Gasanteil zur Ansteuerung der Gasdrosselklappe bestimmt wird. Zur Vermeidung von Drehzahlschwankungen und langen Systemantwortszeiten bei einem Lastwechsel wird das Ansteuersignal für die Gasdrosselklappe über einen additiven Korrekturfaktor verändert. Berechnet wird dieser aus der Drehzahl-Regelabweichung und einem proportionalen Wert, alternativ einem Integral-Ausdruck.

Aus der nicht vorveröffentlichten deutschen Patentanmeldung mit dem amtlichen Aktenzeichen DE 10 2007 045 195.9 ist ein Verfahren zur Regelung eines stationären Gasmotors bekannt, bei dem eine Gasdrosselklappe und eine Gemischdrosselklappe in Abhängigkeit derselben Steuergröße, hier: ein Soll-Volumenstrom, parallel angesteuert werden. Bestimmt wird der Soll-Volumenstrom an Hand eines Soll-Moments, welches als Stellgröße über einen Drehzahlregler aus einer Soll-Ist-Abweichung der Drehzahlen berechnet wird. Zur Verbesserung der Betriebssicherheit ist eine Momentbegrenzung vorgesehen, über welche das Soll-Moment in Abhängigkeit eines Fehler-Zustandssignals, eines zulässigen mechanischen Maximalmoments und der Ist-Drehzahl begrenzt wird. Das Fehler-Zustandssignal wird zum Beispiel bei Sensorausfall gesetzt. Auf Grund der hohen Dynamik bei einer Lastschaltung kann bei diesem Regelsystem ein zu fettes Gemisch entstehen. Ein zu fettes Gemisch bewirkt eine höhere Bauteilbelastung, eine erhöhte Verbrennungstemperatur und damit schlechtere Abgaswerte.

Der Erfindung liegt die Aufgabe zu Grunde, das zuvor beschriebene Verfahren hinsichtlich der Zulässigkeit des Gemisches weiter zu entwickeln.

Gelöst wird die Aufgabe durch ein Verfahren, bei dem eine Drehzahl-Regelabweichung aus einer Soll-Drehzahl sowie einer Ist-Drehzahl berechnet wird und aus der Drehzahl-Regelabweichung über einen Drehzahlregler als Stellgröße ein Soll-Moment bestimmt wird. Das Soll-Moment wiederum wird über ein Luftverhältnis-Begrenzungsmoment mittels einer Momentbegrenzung begrenzt, woraus ein begrenztes Soll-Moment resultiert. Ferner wird bei diesem Verfahren aus dem begrenzten Soll-Moment ein Soll-Volumenstrom zur Festlegung eines Gemisch-Drosselklappenwinkels sowie eines Gas-Drosselklappenwinkels bestimmt.

Berechnet wird das Luftverhältnis-Begrenzungsmoment aus einem minimalen Lambdawert und einem Ist-Gemischvolumen. Der minimale Lambdawert wird über ein Kennfeld in Abhängigkeit der Ist-Drehzahl und einem Altwert des begrenzten Soll-Moments berechnet. Der Altwert des begrenzten Soll-Moments wiederum entspricht dem beim vorherigen Programmdurchlauf berechneten begrenzten Soll-Moment. Das Ist-Gemischvolumen bestimmt sich zumindest aus einer Gemischtemperatur und einem Ist-Gemischdruck, welche im Receiverrohr gemessen werden, sowie der Ist-Drehzahl. Selbstverständlich kann das Ist-Gemischvolumen anstatt berechnet auch alternativ direkt gemessen werden. Zur Verbesserung des Startvorgangs wird das Luftverhältnis-Begrenzungsmoment auf ein vorgebbares Startmoment gesetzt.

Damit die Erfindung als Ergänzung zu der aus der DE 10 2007 045 195.9 bekannten Momentbegrenzung verwendet werden kann, wird das begrenzte Soll-Moment über eine Minimalwertauswahl auf den kleinsten wert des Soll-Moments, des Luftverhältnis-Begrenzungsmoments, eines Fehlermoments bei Sensorausfall oder eines Maximalmoments gesetzt. Letzteres wird zumindest aus einem zulässigen mechanischen Maximalmoment und einem grenzdrehzahlabhängigen Moment festgelegt.

Die Erfindung bietet als wesentlichen Vorteil, dass unter Beachtung der Emissionsrichtlinien und der Sicherheitsbetriebsgrenzen, auch bei dynamischen Zuständen eine unzulässige Gemischanfettung verhindert wird.

In den Zeichnungen ist ein bevorzugtes Ausführungsbeispiel dargestellt. Es zeigen:

Figur 1    ein Gesamtschaubild,

Figur 2    ein Blockschaltbild zur Ansteuerung der Gasdrosselklappe und der Gemischdrosselklappen,

Figur 3    ein Blockschaltbild der Momentbegrenzung,

Figur 4    ein Blockschaltbild der Luftverhältnis-Begrenzung und

Figur 5    eine Lastschaltung als Zeitdiagramm.

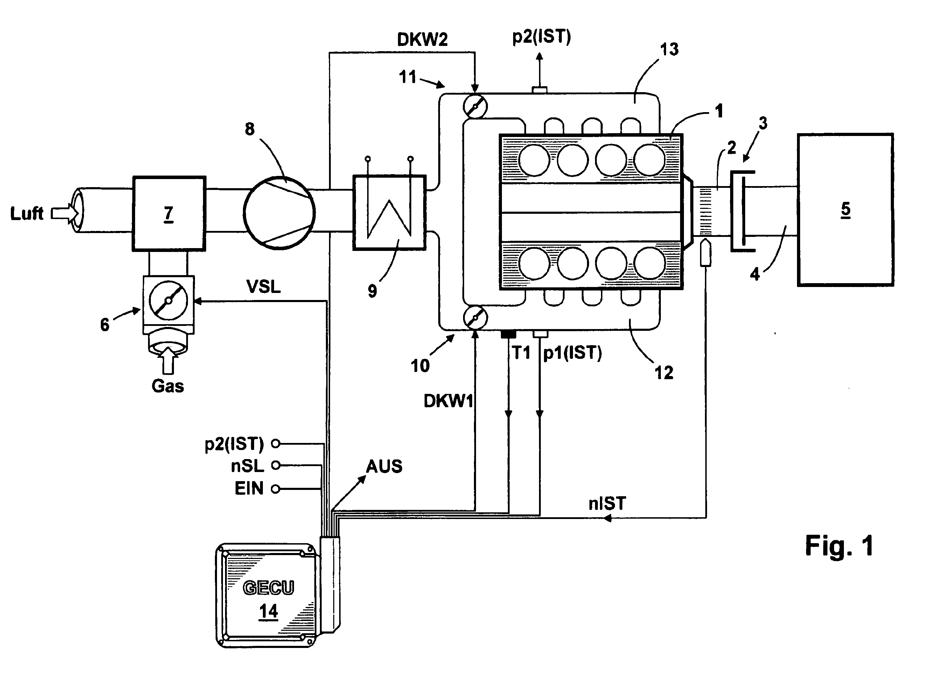

Die Figur 1 zeigt ein Gesamtschaubild eines stationären Gasmotors 1 in V-Anordnung. Der Gasmotor 1 treibt über eine Welle 2, eine Kupplung 3 und eine Welle 4 einen Generator 5 an. Über den Generator 5 wird elektrische Energie erzeugt, welche in ein elektrisches Netz eingespeist wird. Dem Gasmotor 1 sind folgende mechanische Komponenten zugeordnet: eine Gasdrosselklappe 6 zum Festlegen eines zugeführten Gas-Volumenstroms, zum Beispiel Erdgas, ein Mischer 7 zur Zusammenführung von Luft und Gas, ein Verdichter 8 als Teil eines Abgasturboladers, ein Kühler 9, eine erste Gemischdrosselklappe 10 auf der A-Seite des Gasmotors 1 und eine zweite Gemischdrosselklappe 11 auf der B-Seite des Gasmotors 1.

Die Betriebsweise des Gasmotors 1 wird durch ein elektronisches Motorsteuergerät 14 (GECU) festgelegt. Das elektronische Motorsteuergerät 14 beinhaltet die üblichen Bestandteile eines Mikrocomputersystems, beispielsweise einen Mikroprozessor, I/O-Bausteine, Puffer und Speicherbausteine (EEPROM, RAM). In den Speicherbausteinen sind die für den Betrieb des Gasmotors 1 relevanten Betriebsdaten in Kennfeldern/Kennlinien appliziert. Über diese berechnet das elektronische Motorsteuergerät 14 aus den Eingangsgrößen die Ausgangsgrößen. In der Figur 1 sind als Eingangsgrößen dargestellt: ein erster Ist-Gemischdruck p1 (IST) sowie eine Gemischtemperatur T1, welche beide im ersten Receiverrohr 12 gemessen werden, ein zweiter Ist-Gemischdruck p2(IST), welcher im zweiten Receiverrohr 13 gemessen wird, eine Ist-Drehzahl nIST des Gasmotors 1, eine Soll-Drehzahl nSL, die von einem nicht dargestellten Anlagenregler des Generators 5 vorgegeben wird, und eine Eingangsgröße EIN. Unter der Eingangsgröße EIN sind die weiteren Eingangssignale zusammengefasst, beispielsweise die Öltemperatur. Als Ausgangsgrößen des elektronischen Motorsteuergeräts 14 sind dargestellt: das Signal eines Soll-Volumenstroms VSL zur Ansteuerung der Gasdrosselklappe 6, das Signal eines ersten Gemisch-Drosselklappenwinkels DKW1 zur Ansteuerung der ersten Gemischdrosselklappe 10, das Signal eines zweiten Gemisch-Drosselklappenwinkels DKW2 zur Ansteuerung der zweiten Gemischdrosselklappe 11 und ein Signal AUS. Das Signal AUS steht stellvertretend für die weiteren Signale zur Steuerung und Regelung des Gasmotors 1.

Die Anordnung besitzt folgende allgemeine Funktionalität: Über die Stellung der Gasdrosselklappe 6 wird ein Gas-Volumenstrom, welcher dem Mischer 7 zugeführt wird, eingestellt. Die Position der ersten Gemischdrosselklappe 10 definiert ein erstes Gemischvolumen und damit den ersten Ist-Gemischdruck p1(IST) im ersten Receiverrohr 12 vor den Einlassventilen des Gasmotors 1. Über die zweite Gemischdrosselklappe 11 werden ein zweites Gemischvolumen und damit der zweite Ist-Gemischdruck p2(IST) im zweiten Receiverrohr 13 vor den Einlassventilen des Gasmotors 1 festgelegt.

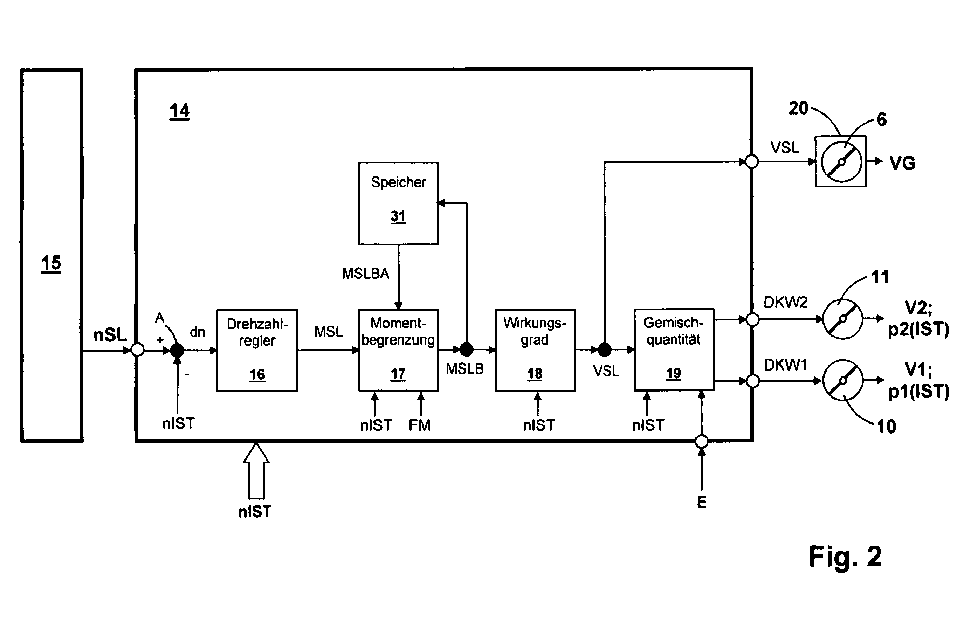

Die Figur 2 zeigt ein Blockschaltbild zur Ansteuerung der beiden Gemischdrosselklappen 10 sowie 11 und der Gasdrosselklappe 6. Das Bezugszeichen 15 kennzeichnet den Anlagenregler des Generators. Das Bezugszeichen 14 kennzeichnet als reduziertes Blockschaltbild das elektronische Motorsteuergerät, wobei die dargestellten Elemente die Programmschritte eines ausführbaren Programms repräsentieren. Die Eingangsgrößen des elektronischen Motorsteuergeräts 14 sind bei dieser Darstellung die Soll-Drehzahl nSL, welche vom Anlagenregler 15 geliefert wird, die Ist-Drehzahl nIST und eine weitere Größe E. Unter der weiteren Größe E sind ein Soll-Lambda, ein Hubvolumen der Zylinder des Gasmotors, der Liefergrad im Sinne einer Zylinderfüllung und die Kraftstoffeigenschaft zusammengefasst. Die Ausgangsgrößen sind der erste Gemisch-Drosselklappenwinkel DKW1 zur Ansteuerung der ersten Gemischdrosselklappe 10, der zweite Gemisch-Drosselklappenwinkel DKW2 zur Ansteuerung der zweiten Gemischdrosselklappe 11 und der Soll-Volumenstrom VSL zur Ansteuerung der Gasdrosselklappe 6. Die innerhalb des elektronischen Motorsteuergeräts 14 dargestellten Elemente sind: ein Drehzahlregler 16 zum Festlegen eines Soll-Moments MSL als Stellgröße, eine Momentbegrenzung 17, ein Speicher 31, eine Einheit Wirkungsgrad 18 und eine Gemischquantität 19 zur Umrechnung des Soll-Volumenstroms VSL in die Gemisch-Drosselklappenwinkel.

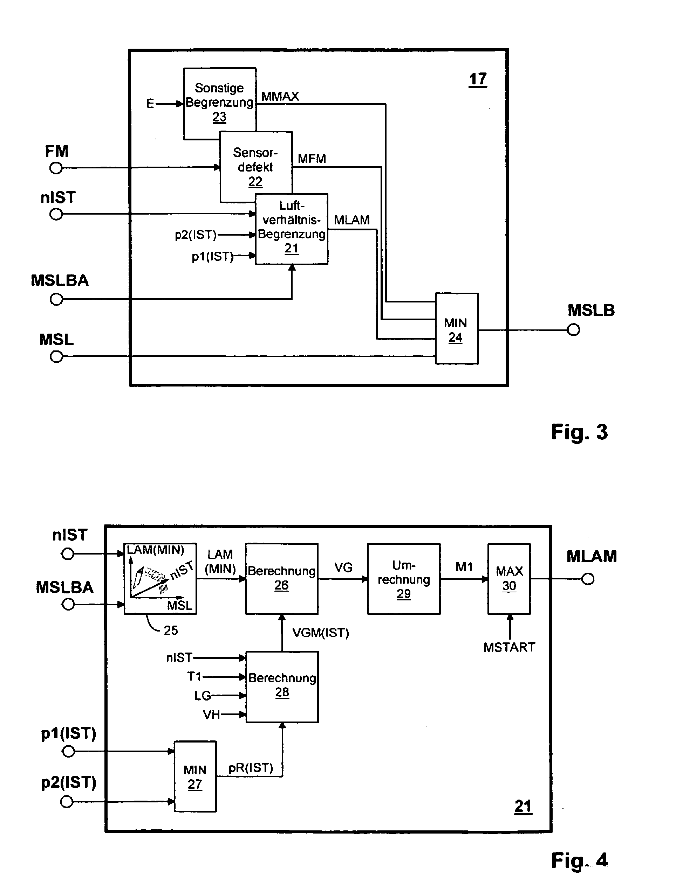

Vom Anlagenregler 15 wird als Leistungswunsch die Soll-Drehzahl nSL vorgegeben, zum Beispiel 1500 1/min, welche einer Frequenz von 50 Hz entspricht. An einem Punkt A wird aus der Soll-Drehzahl nSL und der Ist-Drehzahl nIST eine Drehzahl-Regelabweichung dn berechnet. Aus der Drehzahl-Regelabweichung dn berechnet der Drehzahlregler 16 als Stellgröße das Soll-Moment MSL. In der Praxis ist der Drehzahlregler 16 als PIDT1-Regler ausgeführt. Über die Momentbegrenzung 17 wird das Soll-Moment MSL limitiert. Die Momentbegrenzung 17 ist als Blockschaltbild in der Figur 3 dargestellt und wird in Verbindung mit dieser erläutert. Das Ausgangssignal der Momentbegrenzung 17 entspricht einem begrenzten Soll-Moment MSLB. Liegt der Wert des Soll-Moments MSL im zulässigen Bereich, so entspricht der Wert des begrenzten Soll-Moments MSLB dem Wert des Soll-Moments MSL. Das begrenzte Soll-Moment MSLB ist die Eingangsgröße des Speichers 31 und der Einheit Wirkungsgrad 18.

Im Speicher 31 wird der aktuelle Wert des begrenzten Soll-Moments MSLB festgehalten. Beim nächsten Programmdurchlauf wird ein neuer Wert des begrenzten Soll-Moments MSLB berechnet. Bevor jedoch der jetzt alte Wert im Speicher 31 mit dem neuen Wert des begrenzten Soll-Moments MSLB überschrieben wird, wird der alte Wert an die Momentbegrenzung 17 ausgegeben. Liegt zum Beispiel zum Zeitpunkt t ein begrenztes Soll-Moment MSLB vor, so entspricht der alte Wert dem begrenzten Soll-Moment zum Zeitpunkt t-1. Im weiteren Text wird dieser alte Wert, also das begrenzte Soll-Moment zum Zeitpunkt t-1, als Altwert des begrenzten Soll-Moments, Bezugszeichen MSLBA, bezeichnet.

Über die Einheit Wirkungsgrad 18 wird dem begrenzten Soll-Moment MSLB in Abhängigkeit der Ist-Drehzahl nIST der Soll-Volumenstrom VSL zugeordnet. Hierzu ist in der Einheit Wirkungsgrad 18 ein entsprechendes Kennfeld hinterlegt. Der Soll-Volumenstrom VSL ist die Eingangsgröße der Gemischquantität 19 und zugleich die Eingangsgröße der Gasdrosselklappe 6. Über die Gemischquantität 19 wird aus dem Soll-Volumenstrom VSL in Abhängigkeit der Ist-Drehzahl nIST sowie der Eingangsgröße E der erste Gemisch-Drosselklappenwinkel DKW1 und der zweite Gemisch-Drosselklappenwinkel DKW2 berechnet. In der Einheit Gemischquantität 19 ist ein erster Regelkreis zur Regelung des ersten Ist-Gemischdrucks p1(IST) und ein zweiter Regelkreis zur Regelung des zweiten Ist-Gemischdrucks p2(IST) zusammengefasst. Mit dem ersten Gemisch-Drosselklappenwinkel DKW1 wird die erste Gemischdrosselklappe 10 angesteuert. Über die erste Gemischdrosselklappe 10 wird ein erstes Gemischvolumen V1 und der erste Ist-Gemischdruck p1(IST) eingestellt. Mit dem zweiten Gemisch-Drosselklappenwinkel DKW2 wird die zweite Gemischdrosselklappe 11 angesteuert, über welche ein zweites Gemischvolumen V2 und der zweite Ist-Gemischdruck p2(IST) eingestellt wird. Mit dem Soll-Volumenstrom VSL wird ebenfalls die Gasdrosselklappe 6 angesteuert. In dieser ist eine Verarbeitungselektronik 20 integriert, über welche dem Wert des Soll-Volumenstroms VSL eine entsprechende Querschnittsfläche und ein entsprechender Winkel zugeordnet werden. Über die Gasdrosselklappe 6 wird ein Gas-Volumenstrom VG als Gasanteil des Gas-Luftgemisches eingestellt. Die parallel Ansteuerung der beiden Gemischdrosselklappen 10 und 11 sowie der Gasdrosselklappe 6 in Abhängigkeit derselben Vorgabegröße, hier: des Soll-Volumenstroms VSL, bewirkt eine kurze Reaktionszeit und eines präzises Einschwingen mit verbesserter Einstellbarkeit des Gesamtsystems. Zudem ist auf Grund der parallelen Ansteuerung eine Lambda-Nachführung nicht erforderlich.

Die Figur 3 zeigt als Blockschaltbild die Momentbegrenzung 17. Die Eingangsgrößen sind das Soll-Moment MSL, der Altwert MSLBA des begrenzte Soll-Moments, die Ist-Drehzahl nIST und das Fehler-Zustandssignal. FM. Die Ausgangsgröße entspricht dem begrenzten Soll-Moment MSLB. Die Elemente des Blockschaltbilds sind eine Luftverhältnis-Begrenzung 21 zur Berechnung eines Luftverhältnis-Begrenzungsmoments MLAM, eine Einheit Sensordefekt 22 zur Festsetzung eines Fehlermoments MFM, eine Einheit Sonstige Begrenzungen 23 zur Festsetzung eines Maximalmoments MMAX und eine Minimalwertauswahl 24. Über die Luftverhältnis-Begrenzung 21 wird an Hand der Ist-Drehzahl nIST, des Altwerts MSLBA des begrenzten Soll-Moments, des ersten Ist-Gemischdrucks p1 (IST) und des zweiten Ist-Gemischdrucks p2(IST) das Luftverhältnis-Begrenzungsmoment MLAM berechnet. Die Luftverhältnis-Begrenzung 21 ist als Blockschaltbild in der Figur 4 dargestellt und wird in Verbindung mit dieser erläutert. Über die Einheit Sensordefekt 22 wird bei einem erkannten Fehler in der Signalerfassung, beispielsweise bei defektem Gemisch-Temperatursensor, ein vorgegebenes Fehlermoment MFM gesetzt. Das Fehler-Zustandssignal FM wird im elektronischen Motorsteuergerät 14 generiert, welches die Eingangssignale prüft. Über die Einheit Sonstige Begrenzung 23 werden in Abhängigkeit einer Eingangsgröße E das Maximalmoments MMAX berechnet, welches ein zulässiges mechanisches Moment, ein grenzdrehzahlabhängiges Moment zur Begrenzung der Ist-Drehzahl und eine anlagenspezifisches Maximalmoment kennzeichnet. Über die Minimalwertauswahl 24 wird dasjenige Moment als begrenztes Soll-Moment MSLB gesetzt, welches den kleinsten Wert aufweist.

In der Figur 4 ist als Blockschaltbild die Luftverhältnis-Begrenzung 21 dargestellt. Die Eingangsgrößen sind die Ist-Drehzahl nIST, der Altwert MSLBA des begrenzte Soll-Moments, der erste Ist-Gemischdruck p1(IST) und der zweite Ist-Gemischdruck p2(IST). Die Ausgangsgröße entspricht dem Luftverhältnis-Begrenzungsmoment MLAM. Die Elemente des Blockschaltbilds sind ein Kennfeld 25 zur Bestimmung eines minimalen Lambdawerts LAM(MIN), eine Einheit Berechnung 26 zur Bestimmung des Gas-Volumenstroms VG, eine Minimalwertauswahl 27, eine Einheit Berechnung 28 zur Bestimmung eines Ist-Gemischvolumens VGM(IST), eine Umrechnung 29 und ein Maximalwertauswahl 30.

Über das Kennfeld 25 wird in Abhängigkeit der Ist-Drehzahl nIST und des Altwerts MSLBA des begrenzten Soll-Moments, also betriebspunktabhängig, ein minimaler Lambdawert LAM(MIN) berechnet, welcher eine erste Eingangsgröße der Einheit Berechnung 26 ist. Die zweite Eingangsgröße ist das Ist-Gemischvolumen VGM(IST), welches über die Einheit Berechnung 28 bestimmt wird. Berechnet wird das Ist-Gemischvolumen VGM(IST) gemäß der Beziehung

$$VGM(IST) = 0.5 \, [VH \cdot LG \cdot nIST \cdot (pR(IST) / pNORM) \cdot (TNORM / T1)],$$

worin VH das Hubvolumen, LG der Liefergrad, nIST die Ist-Drehzahl, pR(IST) ein repräsentative Ist-Gemischdruck, pNORM der Normluftdruck (1013 mbar), TNORM die Normtemperatur 273.15K und T1 die Gemischtemperatur im Receiverrohr bedeuten. Der repräsentative Ist-Gemischdruck pR(IST) kann auf Grund der Minimalwertauswahl 27 entweder den Wert des ersten Ist-Gemischdrucks p1 (IST) oder den Wert des zweiten Ist-Gemischdrucks p2(IST) annehmen. Durch die Minimalwertauswahl 27 wird die Betriebssicherheit erhöht, da der kleinere Ist-Gemischdruck maßgeblich das Luftverhältnis-Begrenzungsmoment MLAM bestimmt. Über die Einheit Berechnung 26 wird an Hand des minimalen Lambdawerts LAM(MIN) und des Ist-Gemischvolumens VGM(IST) der Gas-Volumenstrom VG berechnet, welcher proportional zum Ist-Gemischvolumen VGM(IST) und umgekehrt proportional zum minimalen Lambdawert LAM(MIN) ist. Über die Umrechnung 29 wird der Gasvolumenstrom VG in ein Moment M1 umgerechnet. Über die Maximalwertauswahl 30 wird das begrenzte Soll-Moment MSLB entweder auf den Wert des Moments M1 oder ein vorgebbares Startmoment MSTART gesetzt.

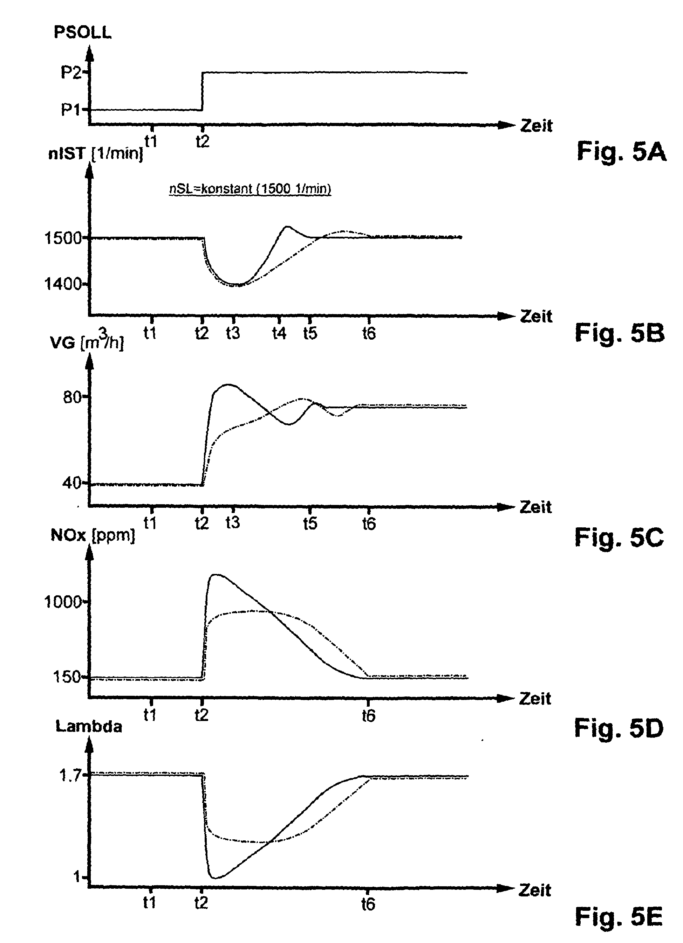

In der Figur 5 ist eine Lastschaltung in einem Zeitdiagramm dargestellt. Die Figur 5 besteht aus den Teilfiguren 5A bis 5E. Diese zeigen jeweils über der Zeit: eine Soll-Leistung PSOLL (Fig. 5A), den Verlauf der Ist-Drehzahl nIST in 1/min (Fig. 5B), den Gas-Volumenstrom VG in Kubikmeter/Stunde (Fig. 5C), den Verlauf der NOx in ppm (Fig. 5D) und das gemessene Lambda (Fig. 5E), welches keine Eingangsgröße des Verfahrens ist und nur zur Verdeutlichung der Verhältnisse dargestellt wurde. In den Figuren kennzeichnet die durchgezogene Linie einen Verlauf gemäß dem Stand der Technik (DE102007045195.9). Die strichpunktierte Linie kennzeichnet den Verlauf gemäß der Erfindung. Bei der weiteren Beschreibung wird von einer konstanten Soll-Drehzahl nSL von 1500 1/min ausgegangen.

Zum Zeitpunkt t1 befindet sich das System im stationären Zustand, d.h. der Gasmotor wird bei einem konstanten Lambdawert von 1.7 betrieben, die Ist-Drehzahl nIST entspricht der Soll-Drehzahl nSL von 1500 1/min mit einem konstanten Gas-Volumenstrom VG von ca. 40 Kubikmeter/Stunde und einem konstanten NOx-Wert von ca. 150 ppm. Zum Zeitpunkt t2 erfolgt eine Lastaufschaltung mit einer höheren Leistungsanforderung. In der Figur 5A ist die höhere Leistungsanforderung mit einem Leistungssprung vom Wert P1 auf den Wert P2 gekennzeichnet.

Beim Verlauf gemäß dem Stand der Technik (durchgezogene Linie) fällt ab dem Zeitpunkt t2 die Ist-Drehzahl nIST stark ab und erreicht zum Zeitpunkt t3 ihren Minimalwert, zum Beispiel 1400 1/min. Auf Grund der nunmehr negativen Regelabweichung berechnet der Drehzahlregler ein höheres Soll-Moment, woraus ein höherer Soll-Volumenstrom sich bestimmt. Auf Grund der parallelen Ansteuerung der Gemischdrosselklappen und der Gasdrosselklappe werden ein höherer Gemischvolumenstrom sowie ein höherer Gas-Volumenstrom VG eingestellt. In der Figur 5C nimmt daher der Gas-Volumenstrom VG bis auf einen Wert von ca. 90 Kubikmeter/Stunde zu. Auf Grund der niederen Ist-Drehzahl nIST ist der Gasmotor jedoch nicht in der Lage einen entsprechenden Gemisch-Volumenstrom zu fördern, d.h. der Luftanteil im Gas-Luftgemisch bleibt in etwa unverändert während hingegen der Gasanteil zunimmt. Dies verursacht ein abnehmendes Lambda (Fig. 5E), also ein zunehmend fetteres Gemisch, und bewirkt einen stark zunehmenden NOx-Anteil im Abgas (Fig. 5D). Ab dem Zeitpunkt t3 erholt sich das System wieder langsam. Bei nunmehr abnehmender Regelabweichung stellt sich ein ebenfalls abnehmender Gas-Volumenstrom VG ein. Da der Gasmotor ein höheres Gemischvolumen fördert, nimmt der Lambdawert wieder zu. Zum Zeitpunkt t4 schwingt die Ist-Drehzahl nIST über die Soll-Drehzahl hinaus und pendelt sich zum Zeitpunkt t5 auf die Soll-Drehzahl nSL von 1500 1/min wieder ein.

Beim Verlauf gemäß der Erfindung (strichpunktierte Linie) wird ab dem Zeitpunkt t2 ebenfalls bei zunehmend negativer Regelabweichung ein höheres Soll-Moment berechnet, dieses wird jedoch auf das Luftverhältnis-Begrenzungsmoment begrenzt. Damit ergibt sich gegenüber dem Verlauf nach dem Stand der Technik ein geringerer Soll-Volumenstrom, ein geringerer Gas-Volumenstrom VG und ein geringeres Gemischvolumen. Wie aus der Figur 5C ersichtlich wird, bleibt der strichpunktierte Verlauf des Gas-Volumenstroms VG im Zeitbereich t2/t3 signifikant unterhalb des als durchgezogene Linie dargestellten Verlaufs. Entsprechend weniger fällt der Lambdawert (Fig. 5E) ab und entsprechend weniger stark steigt der NOx-Wert an. Zum Zeitpunkt t5 schwingt die Ist-Drehzahl nIST über die Soll-Drehzahl nSL hinaus und stabilisiert sich ab dem Zeitpunkt t6 auf dem Niveau der Soll-Drehzahl nSL. Ebenfalls zum Zeitpunkt t6 erreichen der Lambdawert und der NOx-Wert ihre Ausgangswerte wieder.

Bezugszeichen

| 1 | Gasmotor |
| 2 | Welle |
| 3 | Kupplung |
| 4 | Welle |
| 5 | Generator |
| 6 | Gasdrosselklappe |
| 7 | Mischer |
| 8 | Verdichter |
| 9 | Kühler |
| 10 | erste Gemischdrosselklappe |
| 11 | zweite Gemischdrosselklappe |
| 12 | erstes Receiverrohr |
| 13 | zweites Receiverrohr |
| 14 | elektronisches Motorsteuergerät (GECU) |
| 15 | Anlagenregler |
| 16 | Drehzahlregler |
| 17 | Momentbegrenzung |
| 18 | Einheit Wirkungsgrad |
| 19 | Gemischquantität |
| 20 | Verarbeitungselektronik |
| 21 | Luftverhältnis-Begrenzung |
| 22 | Einheit Sensordefekt |
| 23 | Einheit Sonstige Begrenzungen |
| 24 | Minimalwertauswahl |
| 25 | Kennfeld |
| 26 | Einheit Berechnung |
| 27 | Minimalwertauswahl |
| 28 | Einheit Berechnung |
| 29 | Umrechnung |
| 30 | Maximalwertauswahl |
| 31 | Speicher |

**Patentansprüche**

1.   Verfahren zur Regelung eines stationären Gasmotors (1), bei dem eine Drehzahl-Regelabweichung (dn) aus einer Soll-Drehzahl (nSL) sowie einer Ist-Drehzahl (nIST) berechnet wird, aus der Drehzahl-Regelabweichung (dn) über einen Drehzahlregler (16) als Stellgröße ein Soll-Moment (MSL) bestimmt wird, bei dem das Soll-Moment (MSL) über ein Luftverhältnis-Begrenzungsmoment (MLAM) mittels einer Momentbegrenzung (17) begrenzt wird, woraus ein begrenztes Soll-Moment (MSLB) resultiert, und bei dem aus dem begrenzten Soll-Moment (MSLB) ein Soll-Volumenstrom (VSL) zur Festlegung eines Gemisch-Drosselklappenwinkels (DKW1, DKW2) sowie eines Gas-Drosselklappenwinkels bestimmt wird.

2. Verfahren nach Anspruch 1,
   **dadurch gekennzeichnet,**
   **dass** Luftverhältnis-Begrenzungsmoment (MLAM) aus einem minimalen Lambdawert (LAM(MIN)) und einem Ist-Gemischvolumen (VGM(IST)) berechnet wird.

3. Verfahren nach Anspruch 2,
   **dadurch gekennzeichnet,**
   **dass** der minimale Lambdawert (LAM(MIN)) über ein Kennfeld (25) in Abhängigkeit eines Altwerts (MSLBA) des begrenzten Soll-Moments (MSLB) und der Ist-Drehzahl (nIST) berechnet wird, wobei der Altwert (MSLBA) dem beim vorherigen Programmdurchlauf berechneten begrenzten Soll-Moment (MSLB) entspricht.

4. Verfahren nach Anspruch 2,
   **dadurch gekennzeichnet,**
   **dass** das Ist-Gemischvolumen (VGM(IST)) zumindest in Abhängigkeit einer Gemischtemperatur (T1) im Receiverrohr (12, 13), einem Ist-Gemischdruck (p1 (IST), p2(IST)) und der Ist-Drehzahl (nIST) berechnet wird.

5. Verfahren nach Anspruch 4,
   **dadurch gekennzeichnet,**
   **dass** der Ist-Gemischdruck als repräsentativer Ist-Gemischdruck (pR(IST)) aus einem ersten (p1(IST)) oder einem zweiten Ist-Gemischdruck (p2(IST)) bestimmt wird.

6. Verfahren nach Anspruch 2,
   **dadurch gekennzeichnet,**
   **dass** das Ist-Gemischvolumen (VGM(IST)) in einem Receiverrohr (12, 13) gemessen wird.

7. Verfahren nach einem der vorausgegangenen Ansprüche,
   **dadurch gekennzeichnet,**
   **dass** das Luftverhältnis-Begrenzungsmoment (MLAM) beim Startvorgang auf ein Startmoment (MSTART) gesetzt wird.

8. Verfahren nach einem der vorausgegangenen Ansprüche,
   **dadurch gekennzeichnet,**
   **dass** das begrenzte Soll-Moment (MSLB) über eine Minimalwertauswahl (24) auf den kleinsten Wert des Soll-Moments (MSL), eines Fehlermoments (MFM), des Luftverhältnis-Begrenzungsmoments (MLAM) oder eines Maximalmoments (MMAX) gesetzt wird, wobei das Maximalmoment (MMAX) zumindest aus einem zulässigen mechanischen Maximalmoment und einem grenzdrehzahlabhängigen Moment festgelegt wird.

**Claims**

1. Method for regulating a stationary gas motor (1), in which a rotational speed regulating error (dn) is calculated from a setpoint rotational speed (nSL) and an actual rotational speed (nIST), a setpoint torque (MSL) is determined as inflated variable from the rotational speed regulating error (dn) by means of a rotational speed regulator (16), in which the setpoint torque (MSL) is limited of an air ratio-limiting torque (MLAM) using a torque limiter (17), on the basis of which a limited setpoint torque (MSLB) results, and in which a setpoint volume flow (VSL) for defining a mixture throttle valve angle (DKW1, DKW2) and a gas throttle valve angle is determined from the limited setpoint torque (MSLB).

2. Method according to Claim 1,
   **characterized**
   **in that** the air ratio-limiting torque (MLAM) is calculated from a minimum lambda value (LAM(MIN)) and an actual mixture volume (VGM(IST)).

3. Method according to Claim 2,

**characterized**

**in that** the minimum lambda value (LAM(MIN))is calculated by means of a characteristic diagram (25) as a function of an old value (MSLBA) of the limited setpoint torque (MSLB) and the actual rotational speed (nIST), wherein the old value (MSLBA) corresponds to the limited setpoint torque (MSLB) which was calculated during the previous programme run.

4. Method according to Claim 2,
**characterized**
**in that** the actual mixture volume (VGM(IST)) is calculated on the basis of a mixture temperature (T1) in the receiver pipe (12, 13), and actual mixture pressure (p1(IST), p2(IST)) and the actual rotational speed (nIST).

5. Method according to Claim 4,
**characterized**
**in that** the actual mixture pressure is determined as a representative actual mixture pressure (pR(IST)) from a first actual mixture pressure (p1(IST)) or a second actual mixture pressure (p2(IST)).

6. Method according to Claim 2,
**characterized**
**in that** the actual mixture volume (VGM(IST)) is measured in a receiver pipe (12, 13).

7. Method according to one of the preceding claims,
**characterized**
**in that** the air ratio-limiting torque (MLAM) is set to a starting torque (MSTART) during the starting process.

8. Method according to one of the preceding claims,
**characterized**
**in that** the limited setpoint torque (MSLB) is set, by means of a minimum value selection (24), to the smallest value of the setpoint torque (MSL), of a fault torque (MFM), of the air ratio-limiting torque (MLAM) or of a maximum torque (MMAX), wherein the maximum torque (MMAX) is defined at least from a maximum permissible mechanical torque and a limiting-rotational-speed-dependent torque.

**Revendications**

1. Procédé de régulation d'un moteur stationnaire (1) à gaz, dans lequel
un écart (dn) de régulation de vitesse de rotation est calculé à partir d'une vitesse de rotation de consigne (nSL) ou d'une vitesse de rotation effective (nIST),
un couple de consigne (MSL) est déterminé en tant que grandeur de réglage à partir de l'écart (dn) de régulation de la vitesse de rotation par un régulateur (16) de vitesse de rotation,
le couple de consigne (MSL) étant limité au moyen d'une limitation de couple (17) par l'intermédiaire d'un couple de limitation (MLAM) du rapport d'air, ce qui fournit un couple de consigne limité (MSLB),
et dans lequel à partir du couple de consigne limité (MSLB), un débit volumique de consigne (VSL) est défini pour fixer un angle (DKW1, DKW2) de clapet d'étranglement de mélange ainsi qu'un angle de clapet d'étranglement de gaz.

2. Procédé selon la revendication 1, **caractérisé en ce que** le couple de limitation du rapport d'air (MLAM) est calculé à partir d'une valeur minimale de lambda (LAM(MIN)) et un débit effectif du mélange (VGM(IST)).

3. Procédé selon la revendication 2, **caractérisé en ce que** la valeur minimale de lambda (LAM(MIN)) est calculée à partir d'un champ de caractéristiques (25) en fonction d'une ancienne valeur (MSLBA) du couple de consigne limité (MSLB) et de la vitesse de rotation de consigne (nIST), l'ancienne valeur (MSLBA) correspondant au couple de consigne limité (MSLB) calculé lors de l'exécution précédente du programme.

4. Procédé selon la revendication 2, **caractérisé en ce que** le débit effectif de mélange (VGM(IST)) est calculé au moins en fonction d'une température (T1) du mélange dans le tube d'admission (12, 13), d'une pression effective du mélange (p1(IST), p2(IST)) et de la vitesse de rotation effective (nIST).

5. Procédé selon la revendication 4, **caractérisé en ce que** la pression effective du mélange est déterminée en tant que pression représentative (pR(IST)) de la pression effective du mélange à partir d'une première pression effective (p1(IST)) du mélange ou d'une deuxième pression effective (p2(IST)) du mélange.

6. Procédé selon la revendication 2, **caractérisé en ce que** le débit effectif de mélange (VGM(IST)) est mesuré dans un tube d'admission (12, 13).

7. Procédé selon l'une des revendications précédentes, **caractérisé en ce que** lors d'une opération de démarrage, le couple de limitation du rapport d'air (MLAM) est fixé à un couple de démarrage (MSTART).

8. Procédé selon l'une des revendications précédentes, **caractérisé en ce que** le couple de consigne limité (MSLB) est fixé par l'intermédiaire d'une sélection (24) de valeur minimale à la plus petite valeur du couple de consigne (MSL), d'un couple d'erreur (MFM), du couple de limitation du rapport d'air (MLAM) ou d'un couple maximum (MMAX), le couple maximum (MMAX) étant fixé à partir d'au moins un couple mécanique maximum admissible et d'un couple qui dépend de la vitesse de rotation limite.

Fig. 1

DKW2
p2(IST)
13
11
p2(IST)
8
1
3
2
Luft
7
5
9
4
VSL
6
10
Gas
DKW1
T1
p1(IST)
12

p2(IST)
nSL
EIN
AUS
nIST

GECU
14

EP 2 225 447 B1

EP 2 225 447 B1

**Fig. 2**

**Fig. 3**

**Fig. 4**

**PSOLL**

P2

P1

t1  t2                                                    Zeit

**Fig. 5A**

**nIST [1/min]**

nSL=konstant (1500 1/min)

1500

1400

t1  t2  t3  t4  t5      t6                              Zeit

**Fig. 5B**

**VG [m³/h]**

80

40

t1  t2  t3        t5      t6                            Zeit

**Fig. 5C**

**NOx [ppm]**

1000

150

t1  t2              t6                                  Zeit

**Fig. 5D**

**Lambda**

1.7

1

t1  t2              t6                                  Zeit

**Fig. 5E**

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1158149 A1
- DE 10346983 A1
- EP 0974745 A2
- DE 102007045195